# EUROPÄISCHE PATENTSCHRIFT

(11) **EP 2 427 354 B1**
(45) Veröffentlichungstag und Bekanntmachung des Hinweises auf die Patenterteilung: **10.07.2013**
(21) Anmeldenummer: 10708197.8
(22) Anmeldetag: 11.03.2010
(51) Int. Cl.: B60S 1/40, B60S 1/38

(54) **ANSCHLUSSVORRICHTUNG ZUM VERBINDEN EINES WISCHARMS MIT EINEM WISCHBLATT**
ATTACHMENT DEVICE FOR CONNECTING A WIPER ARM TO A WIPER BLADE
DISPOSITIF DE RACCORDEMENT SERVANT A RACCORDER UN BRAS D'ESSUIE-GLACE A UN BALAI D'ESSUIE-GLACE

(30) Priorität: 04.05.2009 DE 102009002783
(43) Veröffentlichungstag der Anmeldung: 14.03.2012
(73) Patentinhaber: Robert Bosch GmbH, 70442 Stuttgart (DE)
(72) Erfinder: AZNAG, Mohamed, B-3271 Scherpenheuvel-Zichem (BE); DEPONDT, Helmut, B-3001 Heverlee (BE)
(86) Internationale Anmeldenummer: PCT/EP2010/053075
(87) Internationale Veröffentlichungsnummer: WO 2010/127888

(56) Entgegenhaltungen:
- EP-A1- 1 847 425
- WO-A1-02/34595
- WO-A1-2010/124896
- DE-A1- 10 349 637
- DE-A1- 19 907 629
- FR-A1- 2 311 694
- US-A1- 2006 248 675

## Beschreibung

### Stand der Technik

Die Erfindung geht von einer Anschlussvorrichtung zum Verbinden eines Wischarms mit einem Wischblatt nach dem Oberbegriff des Anspruchs 1 aus.

Aus der DE 10 2006 031 514 A1 ist ein Wischblatt für Scheiben von Kraftfahrzeugen bekannt, das im mittleren Bereich ein Anschlusselement zum gelenkigen Verbinden mit einem Wischarm aufweist. Das Anschlusselement umfasst ein Grundelement, das aus zwei Seitenteilen zusammengesetzt ist, die einander zugewandte offene Längsnuten aufweisen. Mit diesen sitzen sie auf zwei als Tragelement dienenden, flachen bandförmigen, vorgebogenen Federschienen, die in seitlichen Längsnuten einer Wischleiste teilweise eingebettet sind und zumindest im Bereich des Anschlusselements ein Stück weit seitlich aus den Längsnuten vorstehen. Die Längsnuten des Grundelements werden nach unten durch einen unteren Schenkel und nach oben durch einen oberen Schenkel begrenzt. An dem oberen Schenkel ist in einem Endbereich ein Vorsprung und im anderen Endbereich eine Aussparung angeordnet, die jeweils zum gegenüberliegenden Seitenteil gerichtet sind. Der Vorsprung des einen Seitenteils passt in die Aussparung des anderen Seitenteils und umgekehrt. In montiertem Zustand fixieren die Vorsprünge in den Aussparungen die Seitenteile in Längsrichtung zueinander und definieren den Abstand der Längsnuten quer zum Wischblatt. Auf einer Seite eines jeden Vorsprungs bzw. einer jeden Aussparung befinden sich jeweils zwei zur Längsrichtung geneigt verlaufende Anlageflächen, wobei die Anlageflächen an dem Vorsprung eine konvexe Dachfläche bilden, die in eine konkave Dachfläche passt, die von den Anlageflächen an den Aussparungen gebildet wird. Somit sind die Seitenteile in Richtung der Hochachse verriegelt.

Auf den den Anlageflächen gegenüberliegenden Seiten der Aussparung kann ein Rasthaken vorgesehen sein, der bei der Montage in eine Rastvertiefung an dem Vorsprung des jeweils anderen Seitenteils des Grundelements einrastet. Die Vorsprünge und die zugeordneten Aussparungen mit den zugehörigen Anlageflächen und Rasthaken bilden einen Führungsblock, der in eine Aussparung in einem Boden einer Blechkralle eingreift.

Die Blechkralle als Anschlussteil umfasst die Seitenteile des Grundelements von außen mit Füßen, die vom Boden der Blechkralle aus zur Wischlippe des Wischblatts hin abgewinkelt sind. Zu den Enden der Blechkralle sind an den Füßen längs gerichtete Laschen angeformt, die bei der Montage in entsprechende Nischen des Grundelements umgebogen werden. Zwischen den Füßen sind vom Boden aus in entgegengesetzter Richtung Seitenwände um etwa 90 Grad umgebogen. Die Seitenwände tragen als Gelenkteil einen Lagerstift, der mit den Seitenwänden vernietet ist und zur drehbaren Lagerung eines mit dem Wischarm verbindbaren Adapters dienen kann.

EP-A-1847 425 offenbart den Oberbegriff des Anspruchs 1.

### Offenbarung der Erfindung

Nach der Erfindung sind das Anschlusselement und der Adapter aus Kunststoff gefertigt, wobei der Adapter einen in einer Längsmittelebene verlaufenden Längssteg besitzt, der in seinem mittleren Bereich einen quer zur Längsrichtung verlaufenden Lagerbolzen trägt. Der Längssteg sowie der Lagerbolzen stehen zum Anschlusselement ein Stück weit über die Seitenwände des Adapters vor, wobei der zum Anschlussteil vorstehende Teil des Längsstegs zwischen zwei Anlageflächen geführt ist, die in Längsrichtung verlaufen und zueinander so versetzt sind, dass in montierter Position jeweils eine Längsseite des Längsstegs an einer Anlagefläche anliegt. Zur Montage ist der Längssteg um eine Hochachse um einen Winkel α, vorzugsweise von ca. 45°, zwischen den Anlageflächen drehbar. Dabei ist die Länge des Lagerbolzens so bemessen, dass er mit seinen Enden in einer montierten Position in Lagerbohrungen der Seitenwände des Anschlussteils einrastet.

Die erfindungsgemäße Anschlussvorrichtung baut flach und kompakt. Sie ist einfach zu montieren und besitzt vielerlei Einsatzmöglichkeiten bei unterschiedlichen Fahrzeugtypen. Außerdem verfügt sie über eine gute Seitenführung des Wischblatts.

Bei der erfindungsgemäßen Anschlussvorrichtung wird der Adapter zunächst gegenüber dem Wischblatt um den Winkel α von ca. 45° gedreht, in Richtung einer Hochachse auf das Anschlusselement gesteckt und dann in Längsrichtung des Wischblatts ausgerichtet. Dabei rastet ein Gelenkteil des Adapters, vorzugsweise in Form eines Lagerbolzens, in ein Gelenkteil des Anschlusselements, vorzugsweise in Form von Lagerbohrungen, ein. Um die einzelnen Montagebewegungen besser koordinieren zu können, ist es zweckmäßig, dass der Längssteg an seinen Stirnseiten durch Führungsflächen des Anschlussteils des Anschlusselements radial geführt ist. Hierdurch werden sowohl Relativbewegungen zwischen dem Adapter und dem Anschlusselement sowohl in Richtung der Hochachse als auch in Schwenkrichtung des Adapters koordiniert. Ferner sind in Schwenkrichtung vor den Lagerbohrungen an den Innenseiten der Seitenwände Führungskulissen vorgesehen, durch die das Einrasten des Lagerbolzens in die Lagerbohrungen erleichtert wird. Der Lagerbolzen kann als Stift den Längssteg durchdringen oder auch durch Lagerzapfen gebildet werden, die an beiden Längsseiten des Längsstegs angeformt sind.

Ferner ist es zweckmäßig, dass die Seitenwände des Anschlusselements im Bereich der Lagerbohrungen gegenüber einer Deckwand überhöht sind. Dadurch kann die Schwenkachse des Adapters von der Deckwand einen größeren Abstand einnehmen, sodass größere Schwenkwinkel bei einer gegebenen Länge des Adapters möglich sind. Mit größeren Schwenkwinkeln des Adapters kann das gleiche Wischblatt bei Fahrzeugen mit sehr unterschiedlichen Krümmungen der Fahrzeugscheiben eingesetzt werden. In die gleiche Richtung zielt die Maßnahme, wenn das Anschlussteil an seinen Enden Anschlussprofile für Spoiler aufweist, dass deren Abstand voneinander so bemessen ist, dass der Adapter ausgehend von einer zum Wischblatt etwa parallelen Lage im Uhrzeigersinn und entgegengesetzter Richtung geschwenkt werden kann, ohne durch die angrenzenden Spoilerprofile oder Anschlussprofilen behindert zu werden.

Grundsätzlich kann das Anschlusselement in jeder bekannten, geeigneten Weise mit dem Tragelement beliebiger Art verbunden werden. Es hat sich jedoch als zweckmäßig erwiesen, dass das Anschlusselement mehrteilig ist, und zwar ein Grundelement besitzt, das in Längsrichtung in zwei Seitenteile geteilt ist und mit einander zugewandten, offenen Längsnuten ein Tragelement in Form einer oder mehrerer vorgebogener, bandförmiger Federschienen umfasst sowie an den einander zugewandten Seiten durch Rastverbindungen miteinander verbunden ist. Zusätzlich zu den Rastverbindungen können die Seitenteile durch das Anschlussteil seitlich zusammengehalten werden, indem die Seitenwände des Anschlussteils mit Rastnocken an ihren Innenseiten in Nischen an den Außenseiten der Seitenteile einrasten.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 eine perspektivische Teilansicht eines Wischblatts während der Montage eines Anschlussteils,
Fig. 2 eine perspektivische Teilansicht eines Wischblatts mit einem montierten Anschlusselement während der Montage eines Adapters,
Fig. 3 eine perspektivische Teilansicht eines Wischblatts mit einem montierten Anschlusselement und eine schematische Darstellung eines Längsstegs mit einem Lagerbolzen,
Fig. 4 eine perspektivische Teilansicht eines Wischblatts mit einem montierten Anschlusselement und einem Adapter kurz vor dem Einrasten des Lagerbolzens,
Fig. 5 eine perspektivische Teilansicht eines Wischblatts mit einer montierten Anschlussvorrichtung,
Fig. 6 eine Teilansicht eines Wischblatts von der Seite mit einer montierten Anschlussvorrichtung mit einem im Uhrzeigersinn geschwenkten Adapter,
Fig. 7 eine Teilansicht eines Wischblatts von der Seite mit einer montierten Anschlussvorrichtung mit einem Adapter in seiner Ausgangsstellung und
Fig. 8 eine Teilansicht eines Wischblatts von der Seite mit einer montierten Anschlussvorrichtung mit einem im Gegenuhrzeigersinn geschwenkten Adapter.

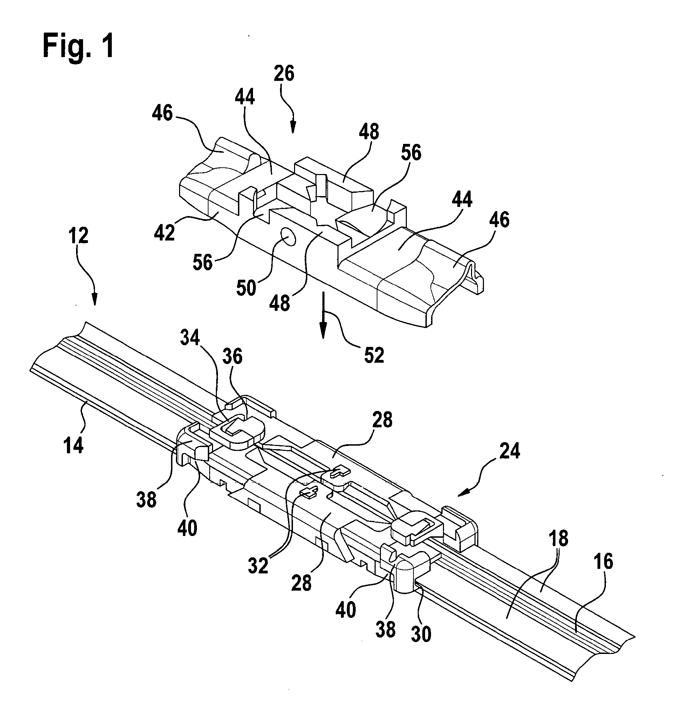

Ein Wischblatt 12 nach Fig. 1 besitzt eine Wischlippe 14, die in üblicher Weise über einen Kippsteg mit einer Kopfleiste 16 verbunden ist. Diese wird von einem Tragelement 18 in Form zweier bandförmiger, vorgebogener Federschienen gehalten. Auf dem Tragelement 18 sind zwei Seitenteile 28 eines Grundelements 24 eines Anschlusselements 22 angebracht, indem Seitenteile 28 miteinander zugewandten Längsnuten 30 das Tragelement an seinen über die Kopfleiste 16 seitlich vorstehenden Teilen umfassen. An den einander zugewandten Seiten der Seitenteile 28 besitzen diese jeweils an ihren Enden einen Rasthaken 34, der mit einer Rastvertiefung 36 des jeweils anderen Seitenteils 28 zusammenwirkt. Durch diese Rastverbindung 34, 36 werden die Seitenteile 28 zusammengehalten. Zusätzlich wird der Zusammenhalt durch ein Anschlussteil 26 unterstützt, das bei der Montage in Montagerichtung 52 in Richtung einer Hochachse auf das Grundelement 24 aufgesetzt wird und mit seinen Seitenwänden 42 die Seitenteile 28 des Grundelements 24 seitlich umfasst. Dabei rasten nicht näher dargestellte Rastnocken in Nischen 40 unterhalb von Verstärkungen 38 der Seitenteile 28 des Grundelements 24 ein. Im mittleren Bereich besitzen die Seitenteile 28 Zentriernocken 32, die die relative Lage des Grundelements 24 zum Anschlussteil 26 sichern.

Während das Grundelement 24 zur Verbindung des Anschlusselements 22 mit dem Tragelement 18 dient, ist der Anschlussteil 26 für die gelenkige Verbindung des Anschlusselements 22 mit einem Adapter 60 bestimmt. Beide Seitenwände 42 des Anschlussteils 26 sind durch eine Deckwand 44 miteinander verbunden, an die sich zu den Enden hin Anschlussprofile 46 für Spoiler 20 des Wischblatts 12 anschließen können. Die Seitenwände 42 besitzen in ihrem mittleren Bereich überhöhte Teile 48, in denen Lagerbohrungen 50 vorgesehen sind.

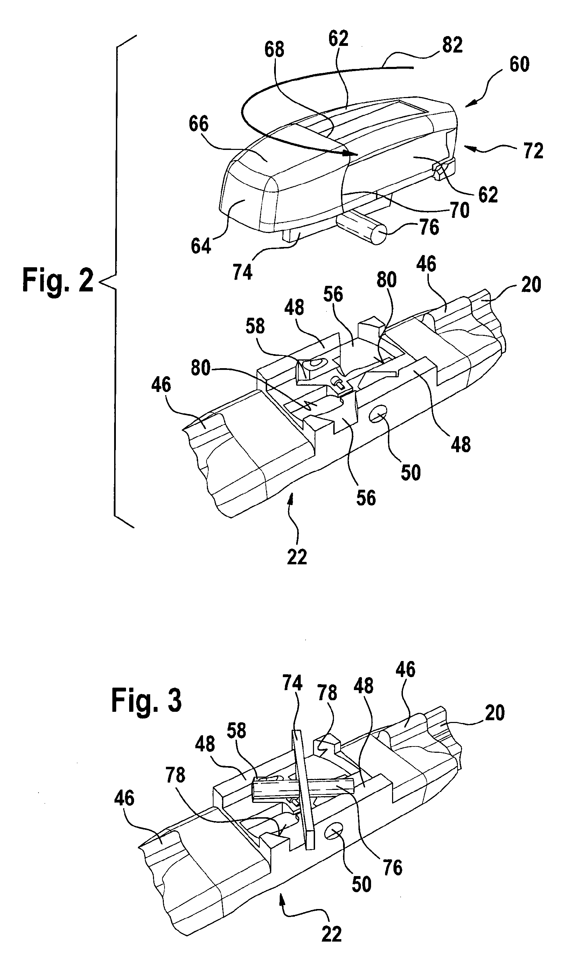

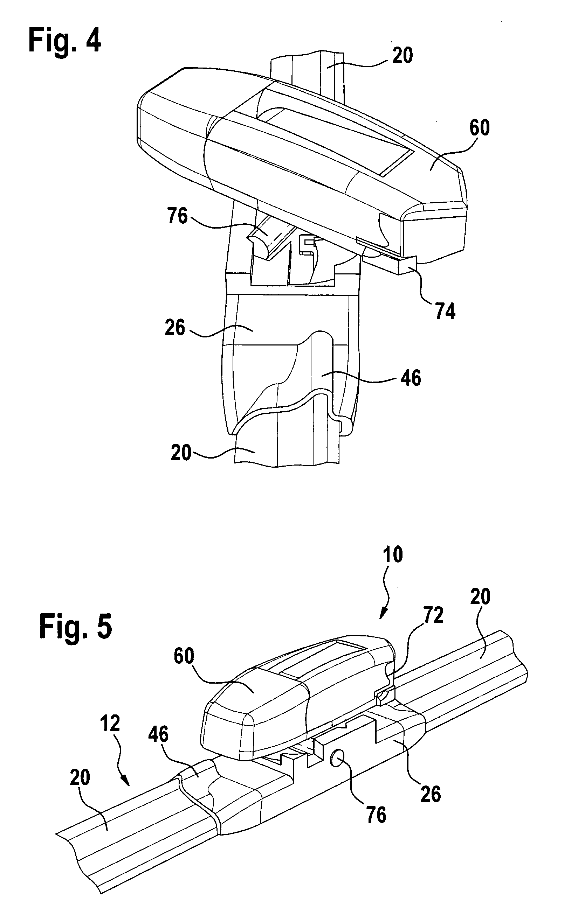

Der Adapter 60 besitzt Seitenwände 62, die durch eine Deckwand 66 miteinander verbunden sind. Die Seitenwände 62 und die Deckwand 66 werden an ihrer Frontseite durch eine Stirnwand 64 abgeschlossen. Ferner besitzen die Deckwand 66 und die Seitenwände 62 an ihren Außenseiten eine Anlagekante 68 und Anlagekanten 70, an denen sich Verbindungselemente des nicht näher dargestellten Wischarms abstützen können. Die Verbindungselemente werden zwischen den Anlagekanten 68, 70 und Verriegelungseinrichtungen 72 am antriebsseitigen Ende des Adapters 60 fixiert. Der Adapter 60 besitzt ferner in seiner Längsmittelebene einen Längssteg 74 mit einem quer verlaufenden Lagerbolzen 76. Der Längssteg 74 und der Lagerbolzen 76 ragen ein Stück weit über die Seitenwände 62 des Adapters 60 zum Anschlusselement 22 vor.
Bei der Montage wird der Adapter 60 um etwa 45° in Drehrichtung 82 gegenüber dem Anschlusselement 22 gedreht und in Richtung einer Hochachse auf das Anschlusselement 22 aufgesetzt. Dazu besitzt das Anschlussteil 26 einen Freiraum 56, der einerseits von Stirnflächen der überhöhten Teile 48 der Seitenwände 42 und andererseits durch Anlageflächen 80 begrenzt wird. Die Anlageflächen 80 verlaufen in Längsrichtung des Wischblatts 12. Sie sind in Längsrichtung zueinander versetzt, sodass sie durch den Längssteg 74 voneinander getrennt sind, der in montierter Stellung jeweils mit einer Längsseite an ihnen anliegt. Bei der Montage wird der Adapter 60 von seiner Ausgangsstellung (Fig. 3, Fig. 4) entgegen der Drehrichtung 82 in seine Endstellung (Fig. 2) zurückgedreht, wobei der Lagerbolzen 76 in die Lagerbohrungen 50 des Anschlussteils 26 einrastet. Um das Einrasten zu erleichtern, sind vor den Lagerbohrungen 50 Führungskulissen 58 vorgesehen, an denen die Stirnseiten des Lagerbolzens 76 entlanggleiten, bis sie in die Lagerbohrungen 50 einrasten. Ferner werden die Stirnflächen des Längsstegs 74 bei der Drehbewegung um die Hochachse an Führungsflächen 78 des Anschlussteils 26 radial geführt. Der Lagerbolzen 76 kann aus einem Stift bestehen, der den Längssteg 74 durchdringt, er kann aber auch durch Lagerzapfen gebildet werden, die entsprechend an dem Längssteg 74 zu beiden Seiten angeformt sind.

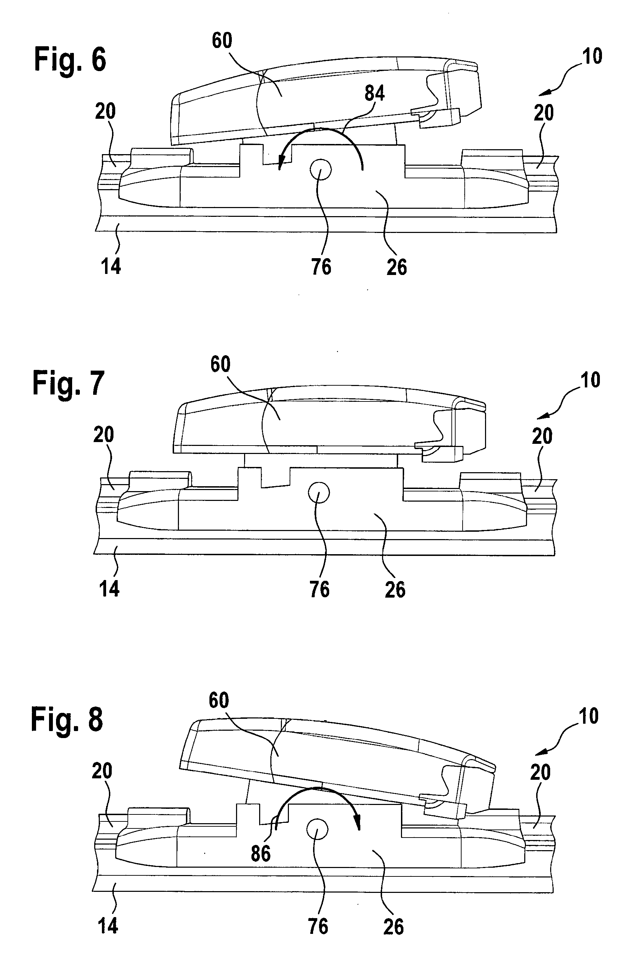

Fig. 5 zeigt eine vollständig montierte Vorrichtung 10. Es ist klar zu erkennen, dass der Adapter 60 zu beiden Enden hin einen ausreichenden Abstand von den Spoilern 20 und den Anschlussprofilen 46 besitzt, sodass für den Adapter 60, wie Fig. 6 bis Fig. 8 zeigen, ausgehend von einer Lage etwa parallel zum Wischblatt 12 (Fig. 7) sowohl im Uhrzeigersinn 86 als auch in entgegengesetzter Richtung 84 ein ausreichender Schwenkwinkel möglich ist. Dadurch können alle technisch wesentlichen Anwendungsbereiche des Wischblatts 12 abgedeckt werden.

## Patentansprüche

1. Anschlussvorrichtung (10) zum Verbinden eines Wischarms mit einem Wischblatt (12), das mit einem Anschlusselement (22) der Anschlussvorrichtung (10) fest verbunden ist, während ein Adapter (60) gelenkig mit dem Anschlusselement (22) verbunden und am Wischarm lösbar befestigt ist, **dadurch gekennzeichnet, dass** das Anschlusselement (22) und der Adapter (60) aus Kunststoff gefertigt sind, wobei der Adapter (60) einen in einer Längsmittelebene verlaufenden Längssteg (74) besitzt, der in seinem mittleren Bereich einen quer zur Längsrichtung verlaufenden Lagerbolzen (76) trägt, und dass der Längssteg (74) sowie der Lagerbolzen (76) zum Anschlusselement (22) ein Stück weit über die Seitenwände (62) des Adapters (60) vorstehen, wobei der zum Anschlussteil (26) vorstehende Teil des Längsstegs (74) zwischen zwei Anlageflächen (80) geführt ist, die in Längsrichtung verlaufen und zueinander so versetzt sind, dass in montierter Position jeweils eine Längsseite des Längsstegs (74) an einer Anlagefläche (80) anliegt und der Längssteg (74) zur Montage um eine Hochachse um einen Winkel α zwischen den Anlageflächen (80) drehbar ist, und dass die Länge des Lagerbolzens (76) so bemessen ist, dass er mit seinen beiden Enden in der montierten Position in Lagerbohrungen (50) in den Seitenwänden (42) des Anschlussteils (26) einrastet.

2. Anschlussvorrichtung (10) nach Anspruch 1, **dadurch gekennzeichnet, dass** der Winkel α ca. 45°beträgt.

3. Anschlussvorrichtung (10) nach Anspruch 1, **dadurch gekennzeichnet, dass** der Längssteg (74) an seinen Stirnseiten durch Führungsflächen (78) des Anschlussteils (26) radial geführt ist.

4. Anschlussvorrichtung (10) nach Anspruch 1 oder 2, **dadurch gekennzeichnet, dass** die Seitenwände (42) des Anschlusselements (22) im Bereich der Lagerbohrungen (50) gegenüber einer Deckwand (44) überhöht sind.

5. Anschlussvorrichtung (10) nach einem der vorhergehenden Ansprüche, **dadurch gekennzeichnet, dass** in Schwenkrichtung vor den Lagerbohrungen (50) an den Innenseiten der Seitenwände (42) Führungskulissen (58) vorgesehen sind.

6. Anschlussvorrichtung (10) nach einem der vorhergehenden Ansprüche, **dadurch gekennzeichnet, dass** das Anschlussteil (26) an seinen Enden Anschlussprofile (46) für Spoiler (20) aufweist, deren Abstand voneinander so bemessen ist, dass der Adapter (60) ausgehend von einer zum Wischblatt (12) etwa parallelen Lage im Uhrzeigersinn (86) und in entgegengesetzter Richtung (84) geschwenkt werden kann.

7. Anschlussvorrichtung (10) nach einem der vorhergehenden Ansprüche, **dadurch gekennzeichnet, dass** das Anschlusselement (22) ein Grundelement (24) besitzt, das in Längsrichtung in zwei Seitenteile (28) geteilt ist und mit einander zugewandten Längsnuten (30) ein Tragelement (18) umfasst, und dass die zwei Seitenteile an den einander zugewandten Seiten durch Rastverbindungen (34, 36) miteinander verbunden sind.

8. Anschlussvorrichtung (10) nach Anspruch 6, **dadurch gekennzeichnet, dass** die Seitenteile (28) zusätzlich zu den Rastverbindungen (34, 36) durch das Anschlussteil (26) seitlich zusammengehalten werden, indem die Seitenwände (42) des Anschlussteils (26) mit Rastnocken an ihren Innenseiten in Nischen (40) an den Außenseiten der Seitenteile (28) einrasten.

9. Anschlussvorrichtung (10) nach einem der vorhergehenden Ansprüche, **dadurch gekennzeichnet, dass** der Adapter (60) Verriegelungseinrichtungen (72) zum Anschluss unterschiedlicher Wischarme besitzt.

10. Wischblatt (12) mit einer Anschlussvorrichtung (10) nach einem der vorhergehenden Ansprüche.

## Claims

1. Attachment device (10) for connecting a wiper arm to a wiper blade (12) which is fixedly connected to an attachment element (22) of the attachment device (10) while an adapter (60) is connected in an articulated manner to the attachment element (22) and is fastened releasably to the wiper arm, **characterized in that** the attachment element (22) and the adapter (60) are manufactured from plastic, wherein the adapter (60) has a longitudinal web (74) which runs in a longitudinal central plane and, in its central region, bears a bearing bolt (76) which runs transversely with respect to the longitudinal direction, and **in that** the longitudinal web (74) and the bearing bolt (76) protrude with respect to the attachment element (22) for a distance over the side walls (62) of the adapter (60), wherein that part of the longitudinal web (74) which protrudes with respect to the attachment part (26) is guided between two bearing surfaces (80) which run in the longitudinal direction and are offset with respect to each other in such a manner that, in the fitted position, one longitudinal side of the longitudinal web (74) bears in each case against one bearing surface (80), and, for installation, the longitudinal web (74) is rotatable about a vertical axis by an angle α between the bearing surfaces (80), and **in that** the length of the bearing bolt (76) is dimensioned in such manner that, in the fitted position, said bearing bolt latches at both ends thereof in bearing bores (50) in the side walls (42) of the attachment part (26).

2. Attachment device (10) according to Claim 1, **characterized in that** the angle α is approx. 45°.

3. Attachment device (10) according to Claim 1, **characterized in that** the longitudinal web (74) is guided radially on the end sides thereof by guide surfaces (78) of the attachment part (26).

4. Attachment device (10) according to Claim 1 or 2, **characterized in that** the side walls (42) of the attachment element (22) are elevated in relation to a top wall (44) in the region of the bearing bores (50).

5. Attachment device (10) according to one of the preceding claims, **characterized in that** guide slots (58) are provided on the inner sides of the side walls (42) before the bearing bores (50) in the pivoting direction.

6. Attachment device (10) according to one of the preceding claims, **characterized in that** the ends of the attachment part (26) have attachment profiles (46) for spoilers (20), the distance of which attachment profiles from each other being dimensioned in such a manner that the adapter (60) can be pivoted in the clockwise direction (86) and in the opposed direction (84) from a position approximately parallel to the wiper blade (12).

7. Attachment device (10) according to one of the preceding claims, **characterized in that** the attachment element (22) has a basic element (24) which is divided in the longitudinal direction into two side parts (28) and, by means of mutually facing longitudinal grooves (30), surrounds a supporting element (18), and **in that** the two side parts are connected to each other on the mutually facing sides by latching connections (34, 36).

8. Attachment device (10) according to Claim 6, **characterized in that** the side parts (28) are held together laterally by the attachment part (26) in addition to the latching connections (34, 36) by the side walls (42) of the attachment part (26) latching by means of latching cams on the inner sides thereof into recesses (40) on the outer sides of the side parts (28).

9. Attachment device (10) according to one of the preceding claims, **characterized in that** the adapter (60) has locking devices (72) for the attachment of different wiper arms.

10. Wiper blade (12) with an attachment device (10) according to one of the preceding claims.

## Revendications

1. Dispositif de raccordement (10) pour le raccordement d'un bras d'essuie-glace à un balai d'essuie-glace (12), qui est connecté fixement à un élément de raccordement (22) du dispositif de raccordement (10), tandis qu'un adaptateur (60) est connecté de manière articulée à l'élément de raccordement (22) et est fixé de manière détachable au bras d'essuie-glace, **caractérisé en ce que** l'élément de raccordement (22) et l'adaptateur (60) sont fabriqués en plastique, l'adaptateur (60) possédant une nervure longitudinale (74) s'étendant dans un plan médian longitudinal, laquelle nervure longitudinale porte dans sa région centrale un boulon de palier (76) s'étendant transversalement par rapport à la direction longitudinale, et **en ce que** la nervure longitudinale (74) ainsi que le boulon de palier (76) dépassent légèrement par rapport à l'élément de raccordement (22) au-delà des parois latérales (62) de l'adaptateur (60), la partie de la nervure longitudinale (74) dépassant par rapport à la partie de raccordement (26) étant guidée entre deux surfaces d'appui (80), lesquelles surfaces d'appui s'étendent dans la direction longitudinale et sont décalées l'une par rapport à l'autre de telle sorte que dans la position montée, un côté longitudinal de la nervure longitudinale (74) s'applique à chaque fois contre une surface d'appui (80) et la nervure longitudinale (74) puisse tourner autour d'un axe vertical suivant un angle α entre les surfaces d'appui (80) en vue du montage, et **en ce que** la longueur du boulon de palier (76) est dimensionnée de telle sorte qu'il s'encliquète avec ses deux extrémités dans la position montée dans des alésages de palier (50) dans les parois latérales (42) de la partie de raccordement (26).

2. Dispositif de raccordement (10) selon la revendication 1, **caractérisé en ce que** l'angle α vaut environ 45°.

3. Dispositif de raccordement (10) selon la revendication 1, **caractérisé en ce que** la nervure longitudinale (74) est guidée radialement au niveau de ses côtés frontaux par des surfaces de guidage (78) de la partie de raccordement (26).

4. Dispositif de raccordement (10) selon la revendication 1 ou 2, **caractérisé en ce que** les parois latérales (42) de l'élément de raccordement (22) sont rehaussées dans la région des alésages de palier (50) par rapport à une paroi de recouvrement (44).

5. Dispositif de raccordement (10) selon l'une quelconque des revendications précédentes, **caractérisé en ce que** dans la direction de pivotement avant les alésages de palier (50), au niveau des côtés internes des parois latérales (42), sont prévues des coulisses de guidage (58).

6. Dispositif de raccordement (10) selon l'une quelconque des revendications précédentes, **caractérisé en ce que** la partie de raccordement (26) présente, au niveau de ses extrémités, des profilés de raccordement (46) pour des déflecteurs (20), dont l'espacement l'un de l'autre est dimensionné de telle sorte que l'adaptateur (60) puisse être pivoté à partir d'une position approximativement parallèle au balai d'essuie-glace (12) dans le sens des aiguilles d'une montre (86) et dans le sens inverse (84).

7. Dispositif de raccordement (10) selon l'une quelconque des revendications précédentes, **caractérisé en ce que** l'élément de raccordement (22) possède un élément de base (24), qui est divisé dans la direction longitudinale en deux parties latérales (28) et qui comprend un élément de support (18) avec des rainures longitudinales (30) tournées l'une vers l'autre, et **en ce que** les deux parties latérales sont connectées l'une à l'autre au niveau des côtés tournés l'un vers l'autre par des liaisons par encliquetage (34, 36).

8. Dispositif de raccordement (10) selon la revendication 6, **caractérisé en ce que** les parties latérales (28) sont maintenues latéralement ensemble, en plus des liaisons par encliquetage (34, 36), par la partie de raccordement (26), les parois latérales (42) de la partie de raccordement (26) s'encliquetant avec des cames d'encliquetage au niveau de leurs côtés intérieurs dans des cavités (40) sur les côtés extérieurs des parties latérales (28).

9. Dispositif de raccordement (10) selon l'une quelconque des revendications précédentes, **caractérisé en ce que** l'adaptateur (60) présente des dispositifs de verrouillage (72) pour le raccordement de divers bras d'essuie-glace.

10. Balai d'essuie-glace (12) comprenant un dispositif de raccordement (10) selon l'une quelconque des revendications précédentes.
